(19) Europäisches Patentamt
European Patent Office
Office européen des brevets

(11) Veröffentlichungsnummer: **0 115 641**
**A2**

(12) # EUROPÄISCHE PATENTANMELDUNG

(21) Anmeldenummer: **83113223.8**

(22) Anmeldetag: **30.12.83**

(51) Int. Cl.³: **C 08 G 65/40**, C 08 G 65/48

(30) Priorität: **12.01.83 DE 3300792**

(43) Veröffentlichungstag der Anmeldung: **15.08.84**
**Patentblatt 84/33**

(84) Benannte Vertragsstaaten: **DE FR GB IT NL**

(71) Anmelder: **BAYER AG, Konzernverwaltung RP**
**Patentabteilung, D-5090 Leverkusen 1 Bayerwerk (DE)**

(72) Erfinder: **Heitz, Walter, Prof. Dr., Am Schmidtborn 5,**
**D-3575 Kirchhain (DE)**
Erfinder: **Risse, Wilhelm, Dipl.-Chem.,**
**Weidenhäuserstrasse 72, D-3550 Marburg (DE)**

(54) **Verfahren zur Herstellung von bifunktionellen Polyphenylenethern.**

(57) Die Erfindung betrifft ein Verfahren zur Herstellung von bifunktionellen Polyphenylethern.

EP 0 115 641 A2

BAYER AKTIENGESELLSCHAFT 5090 Leverkusen, Bayerwerk

Zentralbereich
Patente, Marken und Lizenzen Eck/by-c

Verfahren zur Herstellung von bifunktionellen Polyphenylenethern

Die Erfindung betrifft ein Verfahren zur Herstellung von bifunktionellen Polyphenylenethern (Polyphenylenoxiden).

Polyphenylenether (bzw. Polyphenylenoxide) sowie mehrere Verfahren zu ihrer Herstellung sind bereits bekannt (z.B. J. Am. Chem. Soc. 81, 6335 (1959), J. Polym. Sci. 58, 581 (1962), US-PS 3 306 879, US-PS 39 14 266, US-PS 39 56 442, US-PS 39 65 069.

So beschreibt beispielsweise NL-PS 64 13 958 ein Verfahren zur Herstellung von Polyphenylenethern, bei dem monofunktionelle Polyphenylenether mit NaOH und KOH zu mehrfunktionellen Polyphenylenethern umgesetzt werden.

Aus der DE-OS 28 22 856 ist ein Verfahren zur Herstellung von Polyphenylenoxiden mit zwei Hydroxylendgruppen bekannt. Bei diesem Verfahren erhalten Polyphenylenoxide, die nur eine Hydroxylgruppe besitzen, durch den Einbau von Chinonen eine weitere Hydroxylgruppe.

Die vorliegende Erfindung betrifft ein Verfahren zur Herstellung von bifunktionellen Polyphenylenoxiden der Formel (I)

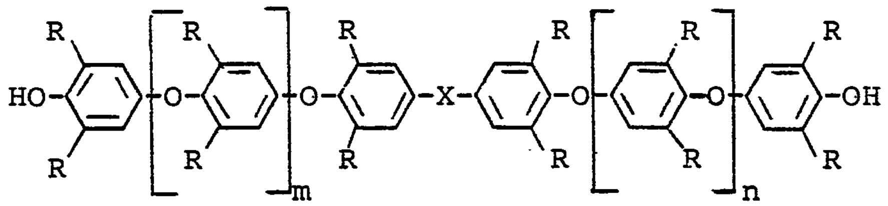

(I),

in welcher

R gleich oder verschieden ist und für Wasserstoff, einen Alkylrest mit 1 bis 4 C-Atomen, vorzugsweise Wasserstoff oder Methyl,

X für eine Gruppe $R^1-C-R^1$, in der $R^1$ für Wasserstoff oder einen Alkylrest mit 1 bis 4 C-Atomen steht, und

m und n für eine ganze Zahl von 0 bis 200, vorzugsweise 5 bis 60 steht,

das dadurch gekennzeichnet ist, daß Polyphenylenether der Formel (II)

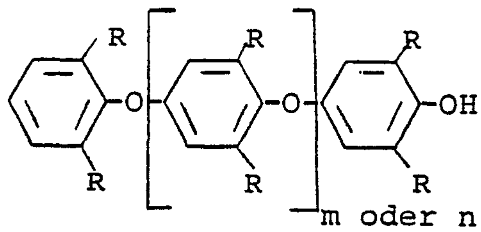

(II),

in welcher

R, m und n die bei Formel (I) angegebene Bedeutung haben,

mit Carbonylverbindungen der Formel (III)

$$R^1-\underset{\underset{O}{\parallel}}{C}-R^1 \qquad (III),$$

in welcher

$R^1$ gleich oder verschieden ist und die bei Formel (I) angegebene Bedeutung hat,

in einem organischen Lösungsmittel, in Gegenwart eines Katalysators bei einer Temperatur von -30 bis 200°C, gegebenenfalls unter erhöhtem Druck, umgesetzt werden.

Als Carbonylverbindung der Formel (III) können Aldehyde, beispielsweise Formaldehyd (z.B. auch in seiner trimeren Form als Trioxan oder als Paraformaldehyd), Acetaldehyd, Butyraldehyd und Ketone wie Aceton, Methylethylketon eingesetzt werden. Bevorzugt werden Aldehyde, besonders bevorzugt Formaldehyd (bevorzugt als Trioxan) eingesetzt.

Als organische Lösungsmittel können aromatische Lösungsmittel wie Benzol, Toluol, Nitrobenzol, halogenierte Lösungsmittel wie Tetrachlorkohlenstoff, Dichlorethan, Trichlorethylen, Chlorbenzol und Schwefelkohlenstoff, eingesetzt werden.

Als Katalysatoren können Metallhalogenide, die unter den Umsetzungsbedingungen als Lewis-Säuren reagieren, verwendet werden, z.B. die Chloride von Elementen der 2., 4. und 8. Nebengruppe und von Elementen der 3. und 5. Hauptgruppe des Periodensystems der Elemente nach Mendelejew, Hofmann Rüdorff, Anorganische Chemie, 19. Auflage, 1963 Seite 97, Vieweg Verlag, Braunschweig, wie $ZnCl_2$, $FeCl_3$, $SnCl_4$, $TiCl_4$, $SbCl_5$, $BF_3$, $AlCl_3$. Weiterhin können Säuren wie Protonensäuren, beispielsweise Halogenwasserstoffe wie HF, HCl, HBr, Polyphosphorsäuren, $H_2SO_4$, p-Toluolsulfonsäure, halogenierte Carbonsäuren wie Trifluoressigsäure und Sulfonsäuren wie Trifluormethansulfonsäure eingesetzt werden.

Die erfindungsgemäße Umsetzung wird bei einer Temperatur von -30 bis 200°C, bevorzugt 0 bis 80°C und einem Druck von 0 bis 15 bar, bevorzugt 0 bis 5 bar durchgeführt.

Pro Mol Polyphenylenether der Formel (II) können 0,5 bis 2 Mol Carbonylverbindung der Formel (III) eingesetzt werden.

Das erfindungsgemäße Verfahren kann wie folgt durchgeführt werden: die Carbonylverbindung und der Polyphenylenether werden im Lösungsmittel vorgelegt und eine Inertgasatmosphäre

(beispielsweise mit $N_2$, Ar) hergestellt. Dazu wird im organischen Lösungsmittel der Katalysator gegeben. Dann wird diese Mischung einige Stunden bis mehrere Tage bei Reaktionstemperatur belassen. Dann wird, beispielsweise durch Ausfällen mit einem Alkohol (z.B. Methanol), das bifunktionelle Polyphenylenoxid isoliert. Die Analyse des Reaktionsproduktes kann auf übliche Weise erfolgen (z.B. osmometrische Molgewichtbestimmung, Bestimmung der OH-Zahl z.B. durch Titration).

Durch das erfindungsgemäße Verfahren können sowohl symmetrische und unsymmetrische bifunktionelle Polyphenylenether hergestellt werden. Im Sinne der Erfindung symmetrische Produkte werden erhalten, wenn Polyphenylenether der Formel (II) eingesetzt werden, die unterschiedliches Molgewicht (unterschiedlicher Index m und n) besitzen.

Durch das erfindungsgemäße Verfahren können Polymerblöcke mit zwei funktionellen Endgruppen hergestellt werden, die eine hohe Glasübergangstemperatur besitzen. Diese Blöcke können beispielsweise mit Säurechloriden wie Phosgen, Terephthaloylchlorid, mit Diisocyanaten, mit Carbonaten und anderen Polymerblöcken zu hochmolekularen Verbindungen umgesetzt werden. Materialien, die aus diesen hochmolekularen Verbindungen hergestellt werden, zeichnen sich durch ihre gute Wärmeformbeständigkeit aus.

Beispiel 1

1,2 g o,o'-Dimethyl-Polyphenylenoxid ($M_n$ = 2700, Dampfdruckosmometrie) (= 0,44 mMol) werden in einem 50 ml Kolben unter Stickstoff vorgelegt. Dazu gibt man 10 ml Chlorbenzol und rührt bis das Polyphenylenoxid gelöst ist. Der Kolben wird mit einem Septum verschlossen, auf dem sich eine 2 ml- und eine 1 ml-Spritze befinden.

Diese Vorrichtung wird in einem Ölbad auf 55°C erhitzt. Unter Rühren werden eine Lösung von 10,8 mg Trioxan (= 0,12 mMol) in 1,5 ml Chlorbenzol aus der einen Spritze und 42,6 mg $BF_3$-Etherat (= 0,3 mMol, 36 % Überschuß) aus der anderen Spritze über einen Zeitraum von 2 h in 7 etwa gleichen Portionen in gleichen Zeitabständen zudosiert. Nach weiteren 18 h Reaktionsdauer bei 55°C wird das Produkt durch Zusatz von 100 ml Methanol ausgefällt, abgetrennt und getrocknet.
Ausbeute: 0,95 g (79 % der Theorie). Das Dampfdruckosmometrisch bestimmte Molekulargewicht (Mn) beträgt 5100.

Durch Titration der phenolischen Hydroxylgruppen erhält man ein Äquivalentgewicht von 2750. Dies entspricht einer OH-Funktionalität von 1,85.

Beispiel 2

4 g o,o'-Dimethyl-Polyphenylenoxid (Mn = 1300) und 51,6 mg Trioxan werden in 50 ml Chlorbenzol gelöst und

unter $N_2$ in ein Reaktionsgefäß gegeben. Im Verlauf von 1/2 h werden 242 mg $BF_3.Et_2O$ gelöst in 2 ml Chlorbenzol unter Rühren zugetropft und weitere 48 h unter Rühren bei Raumtemperatur belassen. Das Produkt wird durch Zusatz von 500 ml Methanol ausgefällt. Ausbeute: 3,02 g (75 % der Theorie) $M_n$ = 2600 (dampfdruckosmometrisches Mittel), titrierte OH-Funktionalität: 2,18.

Beispiel 3

3 g o.o'-Dimethyl-Polyphenylenoxid ($M_n$ = 1300), 36,9 mg Trioxan und 100 mg $ZnCl_2$ werden mit 60 ml Benzol in einen Rührautoklaven gegeben. Bei 60°C werden 5 bar HCl aufgedrückt. Nach 20 h Reaktionsdauer wird das Produkt durch Zusatz von 500 ml Methanol ausgefällt. Ausbeute: 2,16 g (72 % der Theorie), Mn = 1800 (dampfdruckosmometrisches Mittel)
Titrierte OH-Funktionalität: 1,48.

Patentansprüche

1. Verfahren zur Herstellung von bifunktionellen Polyphenylenoxiden der Formel (I)

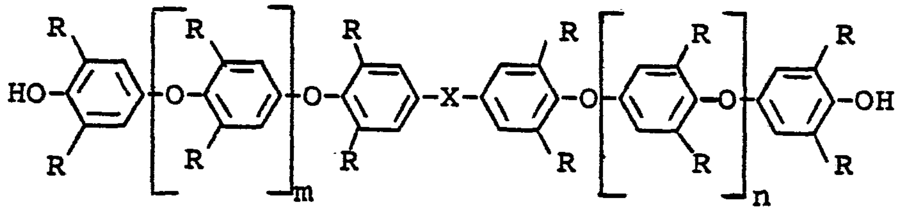

(I),

in welcher

R gleich oder verschieden ist und für Wasserstoff, einen Alkylrest mit 1 bis 4 C-Atomen,

X für eine Gruppe $R^{1}-\overset{|}{\underset{|}{C}}-R^{1}$, in der $R^1$ für Wasserstoff oder einen Alkylrest mit 1 bis 4 C-Atomen steht und

m und n für eine ganze Zahl von 0 bis 200 steht,

dadurch gekennzeichnet, daß Polyphenylenether der Formel (II)

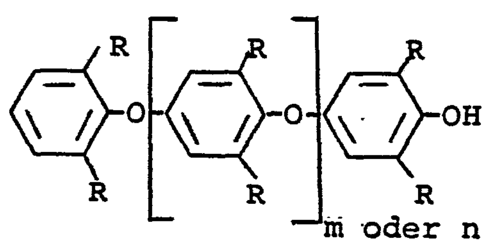

(II),

in welcher

R, m und n die bei Formel (I) angegebene Bedeutung haben,

mit Carbonylverbindungen der Formel (III)

$$R^1-\underset{\underset{O}{\|}}{C}-R^1 \qquad (III),$$

in welcher

$R^1$ gleich oder verschieden ist und die bei Formel (I) angegebene Bedeutung hat,

in einem organischen Lösungsmittel, in Gegenwart eines Katalysators bei einer Temperatur von -30 bis 200°C, gegebenenfalls unter erhöhtem Druck, umgesetzt werden.

2. Verwendung von Polyphenylenoxiden gemäß Anspruch 1 zur Modifizierung von Kunststoffen.